(19) **Europäisches Patentamt**

**European Patent Office**

**Office européen des brevets**

(11) **EP 1 521 185 A1**

(12) **EUROPÄISCHE PATENTANMELDUNG**

| | |
|---|---|
| (43) Veröffentlichungstag:<br>**06.04.2005   Patentblatt 2005/14** | (51) Int Cl.⁷: **G06F 17/50** |

(21) Anmeldenummer: **04008136.6**

(22) Anmeldetag: **02.04.2004**

| | |
|---|---|
| (84) Benannte Vertragsstaaten:<br>**AT BE BG CH CY CZ DE DK EE ES FI FR GB GR HU IE IT LI LU MC NL PL PT RO SE SI SK TR**<br>Benannte Erstreckungsstaaten:<br>**AL HR LT LV MK** | (72) Erfinder:<br>• **Haasis, Siegmar, Dr.**<br> **73666 Baltmannsweiler (DE)**<br>• **Mbang Sama, Achille**<br> **89275 Oberelchingen (DE)**<br>• **Prieur, Michael**<br> **89073 Ulm (DE)** |
| (30) Priorität: **17.04.2003  EP 03008974** | |
| (71) Anmelder: **DaimlerChrysler AG**<br>**70567 Stuttgart (DE)** | |

(54)   **Verfahren zum Konstruieren von Bauteil und Umformwerkzeug**

(57)   Die Erfindung betrifft ein Verfahren zum automatischen Erzeugen einer rechnerverfügbaren Geometrie eines Bauteils und einer rechnerverfügbaren Geometrie eines Umformwerkzeugs zum Herstellen dieses Bauteils. Eine durch das Umformen herzustellende Kontur (E1) des Bauteils und die Position mindestens einer Bohrung im Bauteil sind in rechnerverfügbarer Form vorgegeben. Mindestens ein rechnerverfügbares Gestaltungselement für die Bohrung wird erzeugt. Dieses Gestaltungselement eine Bauteil-Sicht, welche die Geometrie der Bohrung im Bauteil beschreibt, und eine Werkzeug-Sicht, welche die Geometrie des Umformwerkzeugs an der der Bohrung benachbarten Stelle beschreibt. Das Gestaltungselement wird an der vorgegebenen Position in die vorgegebene herzustellende Kontur (E1) eingefügt. Die vorgegebene Kontur (E1) und die Bauteil-Sicht des Gestaltungselements werden zur Bauteil-Geometrie (E3) zusammengefügt, die vorgegebene Kontur (E1) und die Werkzeug-Sicht (2) zur Umform-Geometrie.

**Fig. 4**

EP 1 521 185 A1

**Beschreibung**

Die Erfindung betrifft ein Verfahren zum automatischen Erzeugen einer rechnerverfügbaren Geometrie eines Bauteils und einer rechnerverfügbaren Geometrie eines Umformwerkzeugs zum Herstellen dieses Bauteils.

Gemäß "Dubbel - Taschenbuch für den Maschinenbau", 20. Auflage, Springer-Verlag, 2001, S23 ff., ist Umformen die gezielte Änderung der Form, der Oberfläche und der Werkstoffeigenschaften eines Bauteils unter Beibehaltung von Masse und Stoffzusammenhang. In der Regel ist das umzuformende Bauteil aus Metall oder einer Metall-Legierung oder einem Verbundwerkstoff hergestellt. "Umformen" ist im Folgenden der Oberbegriff für Druckumformen (DIN 8583), Zugdruckumformen (DIN8584), Zugumformen (DIN 8585), Biegeumformen (DIN 8586) und Schubumformen (DIN 8587).

Ein Teil des Umformwerkzeugs kommt mit dem umzuformenden Bauteil in Berührung und prägt diesem eine Geometrie auf. Dieser Teil der Geometrie des Umformwerkzeugs wird im folgenden Umformgeometrie genannt. In nachfolgenden Fertigungsschritten wird aus der Geometrie, die diese Umformgeometrie dem Bauteil aufprägt, das fertige Bauteil gefertigt. Zu diesen nachfolgenden Schritten können beispielsweise das Herstellen von Bohrungen, das Ausstanzen von Löchern und Umfalzungen gehören.

In M. Pietsch: "Karosserieteile virtuell herstellen - Prozeßsimulation für die Automobilindustrie", "Automotive Circle International" Conference, Oktober 2000, wird ein Verfahren offenbart, um zunächst die Geometrie eines Bauteils zu konstruieren und anschließend die eines Umformwerkzeugs, das dieses Bauteil herstellt. Um von der Bauteil- zur Umform-Geometrie zu gelangen, werden Löcher und Aussparungen in der Bauteil-Geometrie verschlossen und Flansche "abgewickelt".

In Sama Mbang et al.: "Feature-basierende Anwendungen in der Prozeßkette Karosserie", CAD/CAM-Report, Heft 1/2003, S. 38 - 42, wird ein Verfahren zur Konstruktion von Bauteil und Umformwerkzeug skizziert. Verwendet werden ein gemeinsames Datenmodell, Assoziativität zwischen Bauteil und Umformwerkzeug sowie "intelligente Gestaltungselemente". Nicht offenbart wird, wie Bohrungen im Bauteil behandelt werden.

Der Erfindung liegt die Aufgabe zugrunde, ein Verfahren zum automatischen Erzeugen einer rechnerverfügbaren Geometrie eines Bauteils und einer rechnerverfügbaren Umform-Geometrie eines Umformwerkzeugs zum Herstellen dieses Bauteils zu schaffen, das Bohrungen im Bauteil und die entsprechende Umform-Geometrie effizient berücksichtigt.

Die Aufgabe wird durch ein Verfahren nach Anspruch 1 gelöst. Vorteilhafte Ausgestaltungen sind in den Unteransprüchen angegeben.

Die mindestens eine Bohrung wird nicht vom Umformwerkzeug hergestellt, sondern in einem nachfolgenden Arbeitsschritt. Daher tritt die Bohrung nur in der Geometrie des fertiggestellten Bauteils auf, aber nicht in der Umform-Geometrie des Umformwerkzeugs. Vorgegeben ist diejenige Kontur des Bauteils, die durch das Umformen herzustellen ist und die sich von der Geometrie des fertigen Bauteils wenigstens durch die Bohrung unterscheidet. Erfindungsgemäß wird ein Gestaltungselement für diese Bohrung in die vorgegebene Kontur des Bauteils eingefügt. Dieses Gestaltungselement weist eine Bauteil- und eine Werkzeug-Sicht auf. Die Bauteil-Sicht beschreibt die Geometrie der Bohrung im Bauteil. Die Werkzeug-Sicht beschreibt die Geometrie des Umformwerkzeugs an der der Bohrung benachbarten Stelle. Die Werkzeug-Sicht wird ein Bestandteil der Umform-Geometrie.

Die Verwendung dieses Gestaltungselements spart Doppelarbeit ein und reduziert die Gefahr, daß die Umform-Geometrie des Umformwerkzeugs nicht zu der vorgegebenen Kontur, die das Bauteil nach dem Umformen haben soll, paßt. Der Vorteil, den die Verwendung dieses Gestaltungselements erbringt, wird besonders wirksam, wenn eine nachträgliche Änderung der Konstruktion der Bohrung erforderlich ist. Eine nachträgliche Änderung wird beispielsweise dann erforderlich, wenn die Kontur verändert wird oder die Bohrung eine andere Position, Form oder Abmessung aufweisen soll. Dank der Erfindung braucht lediglich ein Gestaltungselement verändert zu werden, und automatisch werden eine veränderte Bauteil-Geometrie und eine zu dieser veränderten Bauteil-Geometrie passende veränderte Umform-Geometrie erzeugt.

Das Verfahren ermöglicht es, die Konstruktion von Bauteil und Umformwerkzeug erst so spät wie möglich in zwei verschiedene Pfade für Bauteil und für Umformwerkzeug aufzuspalten und so lange wie möglich beide Geometrien gemeinsam zu konstruieren. Dadurch wird Doppelarbeit reduziert, und die Gefahr wird verringert, daß die Geometrie des Bauteils nicht zu der Umform-Geometrie paßt.

Das Verfahren nach Anspruch 6 ist vorzugsweise eine Ausgestaltung des Verfahrens nach Anspruch 1, läßt sich aber auch durchführen, ohne daß sämtliche Verfahrensschritte von Anspruch 1 durchgeführt werden. Im allgemeinsten Fall betrifft das Verfahren ein Verfahren zum automatischen Erzeugen einer rechnerverfügbaren Geometrie eines Bauteils und einer rechnerverfügbaren Umform-Geometrie eines Umformwerkzeugs zum Herstellen dieses Bauteils. Eine durch das Umformen herzustellende Kontur des Bauteils, eine Position und eine Länge für einen nach dem Umformen herzustellenden Flansch am Bauteil sowie ein Wert für den Krümmungsradius des Flansches sind vorgegeben. Der Flansch wird nicht vom Umformwerkzeug, sondern erst in einem nachfolgenden Arbeitsschritt hergestellt. Daher tritt der Flansch nur in der Geometrie des fertiggestellten Bauteils auf, aber nicht in der Umform-Geometrie.

Gemäß der Ausgestaltung nach Anspruch 6 wird ein Gestaltungselement für diesen Flansch erzeugt. Dieses Gestaltungselement weist eine automatisch auswertbare Rechenvorschrift über den Zusammenhang zwischen der Länge des Flanschs, der Länge des Bauteil-Bereichs, aus dem der Flansch hergestellt wird, und dem Krümmungsradius auf. Dieses Gestaltungselement für den Flansch wird an der vorgegebenen Position in die vorgegebene Kontur eingefügt. Mit Hilfe der vorgegebenen Länge und der Berechnungsvorschrift werden eine Bauteil-Sicht, welche die Geometrie des Flansches im Bauteil beschreibt, und eine Werkzeug-Sicht, welche die Geometrie des Umformwerkzeugs an der dem Flansch benachbarten Stelle beschreibt, erzeugt. Die vorgegebene Kontur und die Bauteil-Sicht des Flansch-Gestaltungselements werden zur Bauteil-Geometrie zusammengefügt. Die vorgegebene Kontur und die Werkzeug-Sicht werden zur Umform-Geometrie zusammengefügt.

Im folgenden wird ein Ausführungsbeispiel der Erfindung anhand der beiliegenden Zeichnungen näher beschrieben. Dabei zeigen:

Fig. 1.     ein Vorgehen zum gleichzeitigen Konstruieren eines Bauteils und eines Umformwerkzeugs;

Fig. 2.     ein hybrides Gestaltungselement für eine Bohrung;

Fig. 3.     ein hybrides Gestaltungselement für einen Flansch;

Fig. 4.     die Nachführung einer Veränderung in der Bauteil-Geometrie;

Fig. 5.     Ankonstruktion der Geometrie des Umformwerkzeugs aus der Umform-Geometrie;

Fig. 6.     resultierende Geometrie des Umformwerkzeugs.

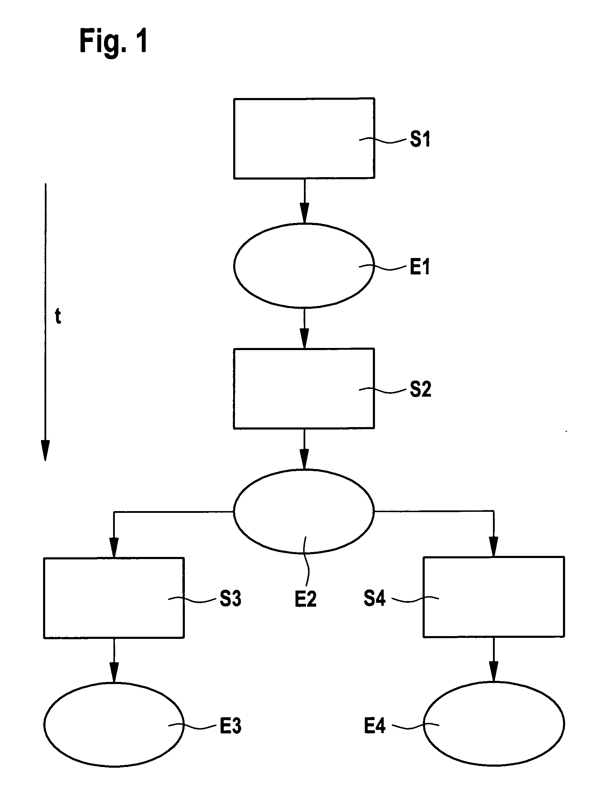

Fig. 1 illustriert ein bevorzugtes Vorgehen zum gleichzeitigen Konstruieren eines Bauteils und eines Umformwerkzeugs zum Herstellen dieses Bauteils. Das erfindungsgemäße Verfahren ist ein Teil dieses Vorgehens. Das bevorzugte Vorgehen umfaßt folgende Schritte:

- Der Schritt S1 liefert als Ergebnis E1 eine durch das Umformen herzustellende Kontur des Bauteils. Diese Kontur wird im folgenden als Ausgangs-Kontur bezeichnet, denn sie fungiert als Ausgangs-Kontur für die dem Umformen nachfolgenden Bearbeitungsschritte. Das Ergebnis E1 wird dem erfindungsgemäßen Verfahren vorgegeben. Diese Ausgangs-Kontur weist keine solchen Bohrungen und Flansche auf, da diese nicht durch das Umformen, sonder erst in nachfolgenden Bearbeitungsschritten hergestellt werden.

- Im Schritt S2 werden Positionen für Gestaltungselemente in dieser Ausgangs-Kontur vorgegeben. Festgelegt wird, von welchen Typen diese Gestaltungselemente sind. Hierfür wird jeweils ein Typ aus einer rechnerverfügbaren Bibliothek von Gestaltungselementen ausgewählt. Durch "Instantiierung" wird jeweils ein Exemplar des ausgewählten Typs erzeugt. Die erzeugten Gestaltungselemente werden an den vorgegebenen Positionen in die Ausgangs-Kontur eingefugt.

- Der Schritt S2 liefert als Ergebnis E2 die Ausgangs-Kontur mit Gestaltungselementen. Dieses Ergebnis fungiert als gemeinsame Ausgangs-Geometrie für die Bauteil- und die Umform-Geometrie.

- Im Schritt S3 wird - ausgehend vom Ergebnis E2 - die Geometrie des Bauteils konstruiert. Hierfür werden vorzugsweise weitere Gestaltungselemente erzeugt und in die Ausgangs-Geometrie eingefügt, insbesondere Hinterschneidungen.

- Der Schritt S4 liefert als Ergebnis E4 die Umform-Geometrie des Umformwerkzeugs als Geometrie desjenigen Teils des Umformwerkzeugs, das mit dem Bauteil in Berührung kommt und es beim Umformen formt.

In Schritt S2 werden sogenannte hybride Gestaltungselemente erzeugt und in die Kontur eingefügt. Diese hybriden Gestaltungselemente haben jeweils eine Bauteil-Sicht, welche die Geometrie des Gestaltungselements im Bauteil beschreibt, und eine Werkzeug-Sicht, welche die Geometrie des Umformwerkzeugs an der dem Gestaltungselement benachbarten Stelle beschreibt. Mindestens ein hybrides Gestaltungselement für eine Bohrung wird durch "Instantiierung" erzeugt und eingefugt. "Bohrungen" ist im Folgenden ein Oberbegriff für Durchgangs- und Sackloch-Bohrungen, Löcher, Taschen und sonstige Aussparungen im Bauteil, die nicht durch das Umformen oder einem vorhergehenden Urformen hergestellt werden, sondern erst in einem nachfolgenden Arbeitsschritt.

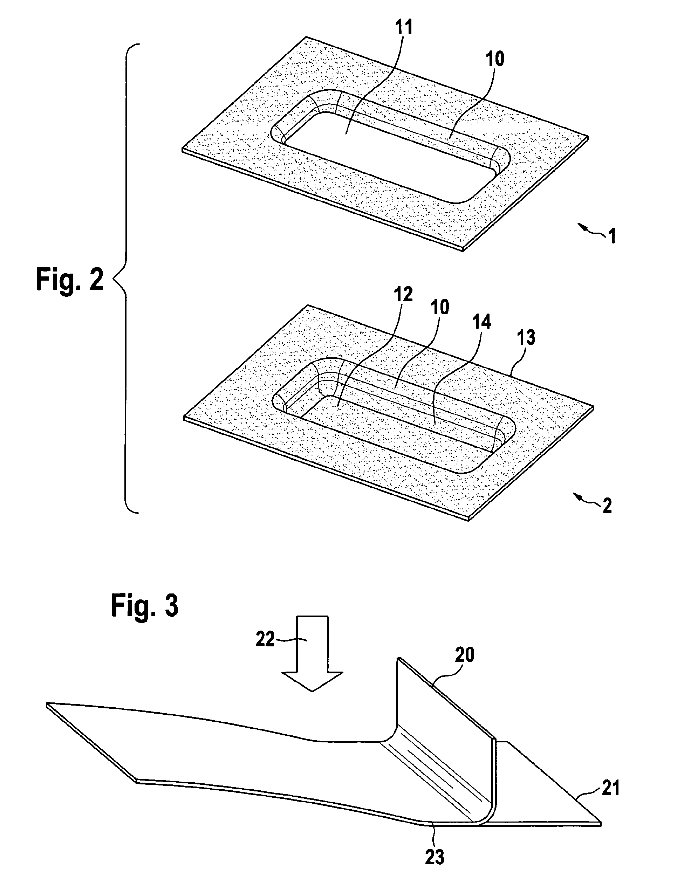

Fig. 2 zeigt ein Beispiel für ein hybrides Gestaltungselement für ein Kragenloch als einer Sonderform einer Durchgangs- oder Sackloch-Bohrung. Dieses Kragenloch hat einen flanschförmigen Kragen 10. Die Bauteil-Sicht 1 dieses Gestaltungselements wird in Fig. 2 oben gezeigt, die Werkzeug-Sicht 2 unten. Die Werkzeug-Sicht 2 entsteht aus der Bauteil-Sicht 1 dadurch, daß automatisch der Verschluß 12 der Öffnung 11 sowie ein zusätzlicher Wulst 14 ergänzt werden. Die Einfassung 13 des Kragens 10 stimmt in beiden Sichten überein, sie schließt bündig mit der in Fig. 2 nicht dargestellten Umgebung ab.

In der Bauteil-Sicht wird also der Verschluß der Bohrung weggelassen, in der Werkzeug-Sicht ist sie vorhanden. Von welchem Typ Bohrung dieses Gestaltungselement ist, wird vorzugsweise über einen Parameter des Gestaltungselements festgelegt. Möglich ist, jederzeit zwischen der Bauteil-Sicht und der Werkzeug-Sicht des Gestaltungselements und damit zwischen Bauteil-Geometrie und Umform-Geometrie umzuschalten. Automatisch wird die jeweils gewünschte Sicht der hybriden Gestaltungselemente und damit die jeweils gewünschte Geometrie erzeugt. Bei der Erzeugung der gewünschten Sichten werden Rechenvorschriften angewendet, die dem jeweiligen Gestaltungselement zugeordnet sind. Diese erzeugen die jeweils gewünschte Sicht und damit die Bauteil-Geometrie oder die Umform-Geometrie.

Vorzugsweise wird zusätzlich oder statt dessen mindestens ein hybrides Gestaltungselement für einen Flansch erzeugt und in die vorgegebene, durch das Umformen herzustellende Ausgangs-Kontur an einer vorgegebenen Position eingefügt. Fig. 3 zeigt ein hybrides Gestaltungselement für einen Flansch. Dargestellt sind die Bauteil-Sicht 20 (hochgewölbt) und die Werkzeug-Sicht 21 (waagrecht). In Fig. 3 ist die Umformrichtung durch den Pfeil 22 angedeutet. Weil nach dem Umformen am umgeformten Bauteil, hier an einem gekrümmten Stück Blech, Schneideoperationen durchgeführt werden und diese nur in bestimmten Schneidrichtungen möglich sind, wird der Flansch erst nach dem Schneiden und nicht bereits durch das Umformen hergestellt. Die Werkzeug-Sicht 21 geht automatisch aus der Bauteil-Sicht 20 durch tangentiales "Abwickeln" der Ausgangs-Kontur 23 hervor. Die Werkzeug-Sicht 21 wird so erzeugt, daß sie eine tangentiale Verlängerung der Ausgangs-Kontur bildet. Ein hybrides Gestaltungselement für einen Flansch umfaßt vorzugsweise eine automatisch auswertbare Rechenvorschrift über den Zusammenhang zwischen dem Krümmungsradius r des Flansches und der Wandstärke d des Bauteils an der Position, an welcher der Flansch hergestellt wird. Diese Rechenvorschrift hängt von dem Werkstoff ab, aus dem das Bauteil hergestellt wird. Der berechnete Krümmungsradius r variiert je nach Werkstoff zwischen 0,5 * d bei weichen Werkstoffen bis zu 7*d bei gehärtetem Stahl. Falls die Krümmung sich in Richtung der Körnung des Metalls erstreckt, so kann der Radius um maximal das Doppelte vergrößert werden.

Eine weitere Rechenvorschrift des Gestaltungselements wird immer dann ausgewertet, wenn die Werkzeug-Sicht aus der Bauteil-Sicht erzeugt wird. Diese Rechenvorschrift gibt den Zusammenhang zwischen der Länge des durch Umformen herzustellenden Blechs (gehört zur Werkzeug-Sicht 21) und der des gefalzten Blechs (gehört zur Bauteil-Sicht 20) an. In dieser Vorschrift bezeichnet 1 die Länge der Ausgangs-Kontur des Blechs, b die Länge des herzustellenden Flanschs, r den Krümmungsradius im Flansch und d die Dicke des Blechs. Die Rechenvorschrift lautet:

$$1 = b + c + 1{,}5708 * (d/3 + r)$$

1,5708 sind etwa $\pi/2$.

Die elektronische Bibliothek mit Typen von Gestaltungselementen umfaßt zusätzlich die gerade beschriebenen Rechenvorschriften. In diesen treten die Parameter des jeweiligen Gestaltungselements als Variablen auf. Ist ein Gestaltungselement durch "Instantiierung" erzeugt, so werden die jeweiligen Parameterwerte in die Variablen eingesetzt, und durch Auswertung der Rechenvorschriften werden weitere Parameterwerte berechnet.

Zu Beginn von Schritt S3 wird aus der Ausgangs-Kontur und den in diese Ausgangs-Kontur eingefügten Gestaltungselementen (Ergebnis E2 in Fig. 1) ein erstes Konstruktionsmodell des Bauteils mit der Bauteil-Geometrie erzeugt. Die Ausgangs-Kontur und die Bauteil-Sichten der hybriden Gestaltungselemente liefern einen Startpunkt für die Konstruktion der Bauteil-Geometrie (Ergebnis E3), die im Schritt S3 erzeugt wird. Aus der Ausgangs-Kontur und den Gestaltungselementen wird außerdem im Schritt S4 die Umform-Geometrie (Ergebnis E4) erzeugt.

Mehrere alternative Ausgestaltungen lassen sich anwenden, um die Bauteil- und die Umform-Geometrie zu erzeugen. Alle Ausgestaltungen stellen sicher, daß nachträgliche Änderungen an der vorgegebenen Ausgangs-Kontur in beiden Geometrien nachgeführt werden und daß eine nachträgliche Änderung an der Bauteil-Geometrie in der Werkzeug-Geometrie nachgeführt wird. Um die Ausgestaltungen zu realisieren, werden vorzugsweise Funktionen eines Software-Werkzeugs zum Konstruieren (CAD-Werkzeug) verwendet. Alternativen hierzu sind, geometrische Daten über XML-Dateien auszutauschen oder zusätzlich Funktionalitäten eines Software-Werkzeugs zur Produktdatenverwaltung zu verwenden.

Zu den Funktionalitäten eines CAD-Werkzeugs gehört es, ein CAD-Modell mit einer Ausgangs-Kontur des Bauteils zu "publizieren" und für andere Modelle nutzbar zu machen. Diese Funktionalität wird verwendet. Die Umform-Geometrie des Umformwerkzeugs wird erzeugt, indem ein zunächst leeres rechnerverfügbares CAD-Modell für das Umformwerkzeug generiert wird. Das Ergebnis E2 wird publiziert. Die so publizierte Geometrie wird assoziativ in das Werkzeug-Modell eingefügt und liefert eine erste Umform-Geometrie. "Assoziativ" bedeutet, daß Verweise von der Quelle zur Senke der Einfügung erhalten bleiben. Nachträgliche Änderungen an der Geometrie des Bauteils werden automatisch auch in der Umform-Geometrie sichtbar. Die Umform-Geometrie umfaßt keine Kopie des Ergebnisses E2, sondern ist Ziel von Verweisen aus diesem Ergebnis E2. Falls im Schritt S3 das CAD-Modell aus Ergebnis E2 bearbeitet wird, werden die Änderungen daher in der Umform-Geometrie sichtbar. Jedoch läßt sich die Umform-Geometrie nicht direkt verändern, sondern nur indirekt durch Änderungen an der Bauteil-Geometrie, die durch die Assoziativität in der Werkzeug-Geometrie nachgeführt wird. Daher ist es in dieser Ausgestaltung nicht möglich, daß Veränderungen an der Umform-Geometrie direkt durchgeführt und automatisch in der in Schritt S3 bearbeiteten Bauteil-Geometrie nachgeführt werden. Die Verweise zeigen nur in eine Richtung, nämlich von der Bauteil- zur Umform-Geometrie. Oft wird an der Bauteil-Geometrie nicht einmal sichtbar, daß diese Geometrie in einer anderen Geometrie, nämlich der Umform-Geometrie, verwendet wird.

Eine alternative Ausgestaltung sieht vor, die Funktionalität "Zusammenbau" (assembly) von CAD-Werkzeugen zu nutzen. In einem Zusammenbau können mehrere CAD-Modelle gleichzeitig geöffnet sein. Das Ergebnis E2 mit der Ausgangs-Kontur wird kopiert. Ein Zusammenbau in Form eines zunächst leeren rechnerverfügbaren Konstruktionsmodells wird generiert. Sowohl die Original-Ausgangs-Kontur als auch die Kopie werden assoziativ in diesen Zusammenbau eingefügt. Wird der Zusammenhang anschließend zur weiteren Bearbeitung geöffnet, so sind beide Konstruktionsmodelle und damit beide Geometrien gleichzeitig geöffnet, und der Zusammenbau wird visualisiert. Sichtbar wird, welche Auswirkung eine Änderung an einer Geometrie auf die andere Geometrie hat. Jede Geometrie läßt sich unabhängig von der anderen bearbeiten. Nach einer Veränderung wird der Zusammenbau automatisch, z. B. "auf Knopfdruck", aktualisiert.

Eine weitere Ausgestaltung sieht vor, daß Änderungen an der Bauteil-Geometrie protokolliert werden. Als Ausgangs-Kontur für die Werkzeug-Geometrie wird in dieser Ausgestaltung eine Kopie des Ergebnisses E2 verwendet. Jedes geometrische Objekt Obj im Original-Ergebnis E2, aus dem im Schritt S3 die endgültige Bauteil-Geometrie erzeugt wird, erhält einen Verweis auf dasjenige geometrische Objekt in der Kopie, das durch Kopieren von Obj erzeugt wurde. Obj verweist also auf seine Kopie in der Werkzeug-Geometrie. Ein Makro wertet die protokollierten Änderungen an der Bauteil-Geometrie aus und führt diese Änderungen in der Kopie nach. Hierfür wertet das Makro die Verweise von Objekten in der Bauteil-Geometrie auf die entsprechenden Objekte in der Werkzeug-Geometrie aus und setzt vorzugsweise Programmaufrufe an eine Programmierschnittstelle des CAD-Werkzeugs, mit dem die Werkzeug-Geometrie bearbeitet wird, ab. Möglich ist in dieser Ausgestaltung sogar, daß Bauteil- und Werkzeug-Geometrie mit unterschiedlichen CAD-Werkzeugen bearbeitet werden. Entweder wird das Makro aus der Bauteil-Geometrie oder aus der Werkzeug-Geometrie heraus aufgerufen. Im ersten Fall wird vorzugsweise der Speicherort der Datei, in dem die Werkzeug-Geometrie abgespeichert ist, vorgegeben, im zweiten Fall der Speicherort der Bauteil-Geometrie.

Eine weitere Ausgestaltung spart Verweise zwischen geometrischen Objekten ein. Das Ergebnis E2 wird wiederum kopiert. Ausgehend vom Ergebnis E2 wird die Bauteil-Geometrie im Schritt S3 konstruiert. Unabhängig davon wird im Schritt S4 ausgehend von der Kopie die Werkzeug-Geometrie konstruiert. Auch bei dieser Ausgestaltung können unterschiedliche CAD-Werkzeuge verwendet werden. In der Regel führen unterschiedliche Bearbeiter diese Änderungen durch. Nach Änderungen in einem der oder in beiden Geometrien wird ein Vergleichsprogramm ausgeführt. Dieses Vergleichsprogramm vergleicht automatisch die aktuelle Bauteil-Geometrie mit der aktuellen Werkzeug-Geometrie, wobei es die Dateien einliest, in denen die Geometrien abgespeichert sind. Falls Abweichungen gefunden werden, so werden diese protokolliert und einem Benutzer angezeigt. Eine Abweichung beruht z. B. darauf, daß zwei einander entsprechende Parameter in der Bauteil- und der Werkzeug-Geometrie unterschiedliche Werte aufweisen, beispielsweise die Position oder der Durchmesser eines Gestaltungselements. Beide Parameterwerte werden angezeigt. Entweder entscheidet sich der Bearbeiter für einen der beiden Werte, und der andere Parameter wird auf den Wert gesetzt, für den der Benutzer sich entschieden hat. Oder der Bearbeiter gibt einen neuen Wert für beide Parameter vor.

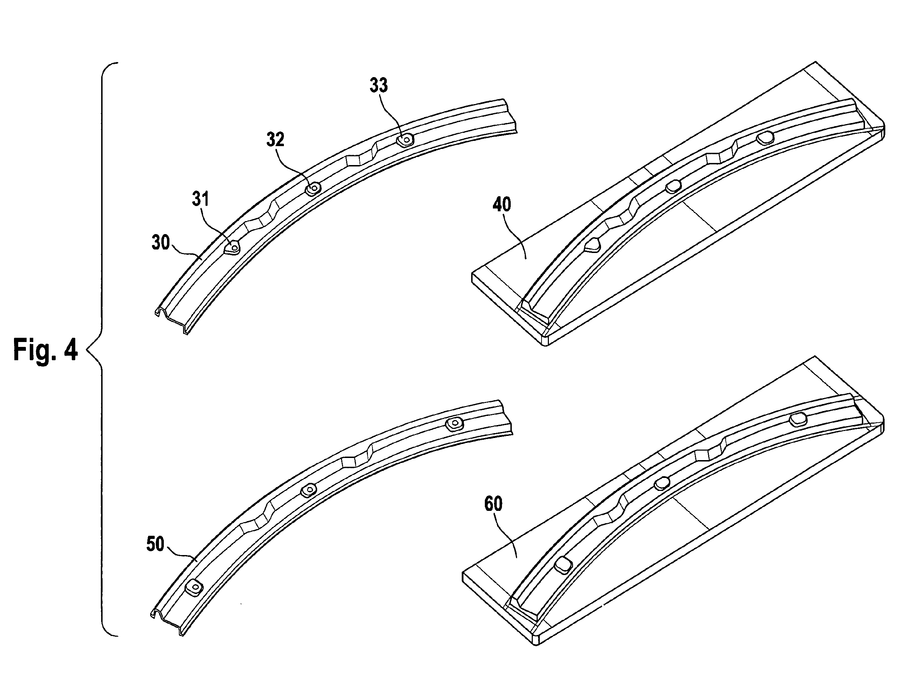

In allen Ausgestaltungen wird eine nachträgliche Änderung an der Bauteil-Geometrie automatisch in der Werkzeug-Geometrie nachgeführt. Insbesondere wird eine Veränderung eines Parameterwertes oder der Position eines Gestaltungselements in der Bauteil-Geometrie automatisch in der Werkzeug-Geometrie nachgeführt. Die Werkzeug-Geometrie wird ebenfalls dann entsprechend aktualisiert, wenn in die Bauteil-Geometrie nachträglich ein zusätzliches Gestaltungselement eingefügt wird. Vorzugsweise sind auch diese nachträglichen Gestaltungselemente hybride und weisen eine Bauteil- und eine Werkzeug-Sicht auf. Auch Veränderungen der Form werden automatisch nachgeführt, z. B. Veränderungen der Abmessungen. Fig. 4 illustriert eine Veränderung der Position von zwei Gestaltungselementen in der Bauteil-Geometrie und die automatisch erzeugte entsprechende Veränderung in der Werkzeug-Geometrie. Gezeigt ist ein Ausschnitt aus der Bauteil-Geometrie 30, die ausgehend vom Ergebnis E2 erzeugt wurde, sowie drei Gestaltungselemente 31, 32 und 33. Aus dem Ergebnis E2 wurde weiterhin eine Werkzeug-Geometrie 40 erzeugt, von der ein Ausschnitt gezeigt ist.

Indem die drei Gestaltungselemente in der Bauteil-Geometrie verschoben werden, entsteht eine veränderte Bauteil-Geometrie 50. Diese Änderungen führen automatisch zu einer veränderten Werkzeug-Geometrie 60.

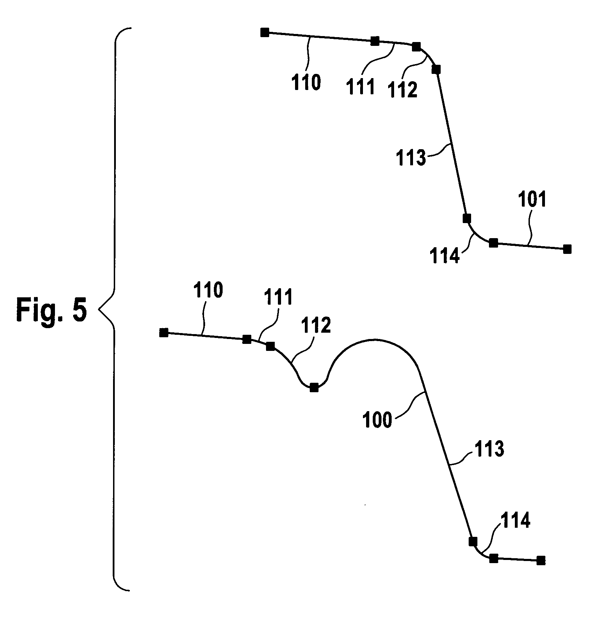

Fig. 5 zeigt, wie durch eine Ankonstruktion die Geometrie des Umformwerkzeugs aus der in Schritt S4 erzeugten Umform-Geometrie entsteht. Die Umform-Geometrie beschreibt nur die Teile des Umformwerkzeugs, die mit dem umzuformenden Blech in Berührung kommen. Das Umformwerkzeug besteht zusätzlich z. B. aus Stempel und Blechhalter. Fig. 5 zeigt zwei Ausschnitte 100 und 101 aus Werkzeug-Sichten, welche die Geometrie eines Umformwerkzeugs beschreiben.

Angedeutet wird eine Abfolge von Gestaltungselementen, die nacheinander aus einer Bibliothek für Typen von Gestaltungselementen ausgewählt werden und an vordefinierten Punkten in die Geometrie eingefügt werden. Von links nach rechts sind dies die folgenden Gestaltungselemente:

- ein Bauteil-Profil 110,

- eine abgewickelte Geometrie 111, das ist die Werkzeug-Sicht, für einen Flansch,

- eine Übergangs-Geometrie 112, die eine Verrundung des Umformwerkzeugs beschreibt,

- einen Flansch 113 und

- eine weitere Übergangs-Geometrie 114.

Die Gestaltungselemente werden so eingefügt, daß glatte und knicklose Konturen für Bauteil und Werkzeug entstehen. Die Lage und Form des Gestaltungselements wird abhängig von einem vorgegebenen Punkt auf der Bauteil-Geometrie und einem auf der Blechhalter-Fläche als Teil der Werkzeug-Geometrie automatisch erzeugt, so daß keine Knicke entstehen. Vorgegeben sind die Bauteil-Geometrie und die Geometrie eines flachen Blechhalters.

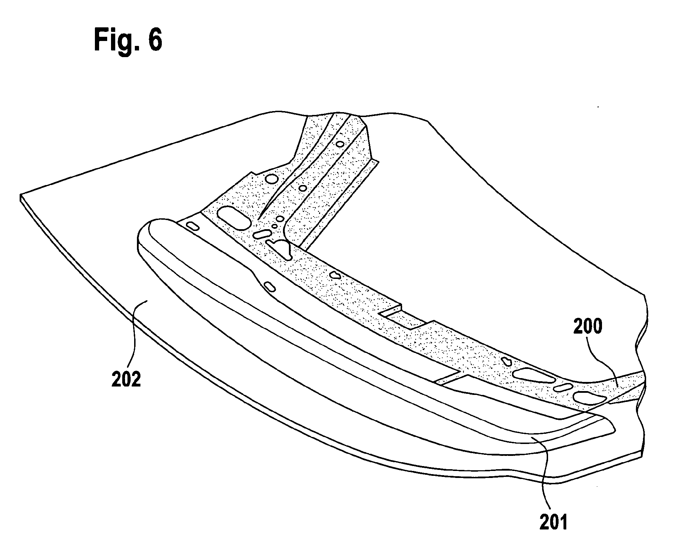

Fig. 6 veranschaulicht eine resultierende Geometrie des Umformwerkzeugs. Gezeigt werden ein Ausschnitt 200 aus der Bauteil-Geometrie und die durch Ankonstruktion entstandene Geometrie des Umformwerkzeugs. Zu sehen ist der Ausschnitt 200 aus der Bauteil-Geometrie, die im wesentlichen der Umform-Geometrie des Umformwerkzeugs gleicht. Außerdem sind ein Ausschnitt 201 aus der Ankonstruktion an die Umform-Geometrie sowie ein Ausschnitt 202 aus dem Blechhalter zu sehen. Die Ankonstruktion wird mit Hilfe von Gestaltungselementen erzeugt.

| Bezugszeichenliste | |
|---|---|
| *Zeichen* | *Bedeutung* |
| 1 | Bauteil-Sicht eines Gestaltungselements für ein Kragenloch |
| 2 | Werkzeug-Sicht eines Gestaltungselements für ein Kragenloch |
| 10 | Kragen eines Kragenlochs |
| 11 | Öffnung eines Kragenlochs |
| 12 | Verschluß der Öffnung 11 |
| 13 | Einfassung eines Kragenlochs |
| 14 | Zusätzliche Wölbung um den Verschluß 12 herum |
| 20 | Bauteil-Sicht eines Gestaltungselements für einen Flansch |
| 21 | Werkzeug-Sicht eines Gestaltungselements für einen Flansch |
| 22 | Umformrichtung |
| 23 | Ausgangs-Kontur |
| 30 | Bauteil-Geometrie |
| 31, 32, 33 | Gestaltungselemente |
| 40 | Werkzeug-Geometrie |
| 50 | veränderte Bauteil-Geometrie |
| 60 | veränderte Werkzeug-Geometrie |
| 100 | Ausschnitt aus einer Kontur eines Umformwerkzeugs |
| 101 | Ausschnitt aus einer Kontur eines weiteren Umformwerkzeugs |

(fortgesetzt)

| Bezugszeichenliste | |
|---|---|
| *Zeichen* | *Bedeutung* |
| 110 | Bauteil-Profil |
| 111 | abgewickelte Geometrie |
| 112 | Übergangs-Geometrie |
| 113 | Flansch |
| 114 | weitere Übergangs-Geometrie |
| 200 | Ausschnitt aus einer Bauteil-Geometrie |
| 201 | Ausschnitt aus einer Ankonstruktion für den Ausschnitt 200 |
| 202 | Ausschnitt aus einem Blechhalter für den Ausschnitt 200 |
| E1 | Ergebnis von S1: Ausgangs-Kontur |
| E2 | Ergebnis von S2: Ausgangs-Kontur mit hybriden Gestaltungselementen |
| E3 | Ergebnis von S3: Bauteil-Geometrie |
| E4 | Ergebnis von S4: Umform-Geometrie |
| S1 | Erzeugen der Ausgangs-Kontur |
| S2 | Einfügen von hybriden Gestaltungselementen |
| S3 | Erzeugen der Bauteil-Geometrie |
| S4 | Erzeugen der Umform-Geometrie |

**Patentansprüche**

1. Verfahren zum automatischen Erzeugen einer rechnerverfügbaren Geometrie eines Bauteils und einer rechnerverfügbaren Umform-Geometrie eines Umformwerkzeugs zum Herstellen dieses Bauteils,
   wobei eine durch das Umformen herzustellende Kontur (E1) des Bauteils und die Position mindestens einer Bohrung im Bauteil in rechnerverfügbarer Form vorgegeben sind und das Verfahren unter Verwendung einer Datenverarbeitungsanlage durchgeführt wird und folgende Schritte umfaßt:

   - Erzeugen mindestens eines rechnerverfügbaren Gestaltungselements für die Bohrung, wobei das Gestaltungselement
     eine Bauteil-Sicht (1), welche die Geometrie der Bohrung im Bauteil beschreibt, und
     eine Werkzeug-Sicht (2), welche die Geometrie des Umformwerkzeugs an der der Bohrung benachbarten Stelle beschreibt, umfaßt,

   - Einfügen des Gestaltungselements an der vorgegebenen Position in die vorgegebene herzustellende Kontur (E1),

   - Zusammenfügen der vorgegebenen Kontur (E1) und der Bauteil-Sicht (1) des Gestaltungselements zur Bauteil-Geometrie (E3) und

   - Zusammenfügen der vorgegebenen Kontur (E1) und der Werkzeug-Sicht (2) des Gestaltungselements zur Umform-Geometrie (E4).

2. Verfahren nach Anspruch 1,
   **dadurch gekennzeichnet,**
   **daß** die Umform-Geometrie (E4) erzeugt wird,
   indem ein zunächst leeres rechnerverfügbares Konstruktionsmodell des Umformwerkzeugs erzeugt wird und die vorgegebene Kontur (E1) mit dem Gestaltungselement assoziativ in das Konstruktionsmodell importiert wird.

**3.** Verfahren nach Anspruch 1,
**dadurch gekennzeichnet,**
**daß** die Umform-Geometrie (E4) erzeugt wird,
indem eine Kopie der vorgegebenen Kontur (E1) mit dem Gestaltungselement erzeugt und die Kopie mit der Werkzeug-Sicht (2) des Gestaltungselements als Umform-Geometrie (E4) verwendet wird.

**4.** Verfahren nach Anspruch 3,
**dadurch gekennzeichnet, daß**
Änderungen an der Bauteil-Geometrie (E3) automatisch protokolliert werden
und diese Änderungen in der Umform-Geometrie (E4) automatisch nachgeführt werden,
wobei das Protokoll der Änderungen auf die Kopie angewendet wird.

**5.** Verfahren nach Anspruch 3 oder Anspruch 4,
**dadurch gekennzeichnet, daß**
nach der Durchführung mindestens einer Änderung an der vorgegebenen Kontur (E1) oder der Kopie der vorgegebenen Kontur (E1)
die vorgegebene Kontur (E1) automatisch mit der Kopie verglichen wird und Abweichungen zwischen vorgegebener Kontur (E1) und Kopie ermittelt werden.

**6.** Verfahren nach einem der Ansprüche 1 bis 5,
**dadurch gekennzeichnet, daß**

- eine Position und eine Länge für einen nach dem Umformen herzustellenden Flansch am Bauteil sowie ein Wert für den Krümmungsradius des Flansches vorgegeben sind,

- ein rechnerverfügbares Gestaltungselement für den Flansch erzeugt wird, das eine automatisch auswertbare Rechenvorschrift über den Zusammenhang zwischen der Länge des Flanschs, der Länge des Bauteil-Bereichs, aus dem der Flansch hergestellt wird, und dem Krümmungsradius umfaßt,

- das Gestaltungselement für den Flansch an der vorgegebenen Position in die vorgegebene Kontur (E1) eingefügt wird,
mit Hilfe der vorgegebenen Länge und der Berechnungsvorschrift eine Bauteil-Sicht (20), welche die Geometrie des Flansches im Bauteil beschreibt, und eine Werkzeug-Sicht (21), welche die Geometrie des Umformwerkzeugs an der dem Flansch benachbarten Stelle beschreibt, erzeugt werden.

**7.** Verfahren nach Anspruch 6,
**dadurch gekennzeichnet, daß**

- das Gestaltungselement eine weitere Berechnungsvorschrift über den Zusammenhang von Krümmungsradius des Flansches und der Wandstärke des Bauteils an der vorgegebenen Position umfaßt

- und der Krümmungsradius aus einem vorgegebenen Wert für die Wandstärke des Flansches durch Anwendung der weiteren Berechnungsvorschrift berechnet wird.

**8.** Computerprogramm-Produkt, das direkt in den internen Speicher eines Computers geladen werden kann und Softwareabschnitte umfaßt, mit denen ein Verfahren nach einem der Ansprüche 1 bis 7 ausgeführt werden kann, wenn das Produkt auf einem Computer läuft.

**9.** Computerprogramm-Produkt, das auf einem von einem Computer lesbaren Medium gespeichert ist und das von einem Computer lesbare Programm-Mittel aufweist, die den Computer veranlassen, ein Verfahren nach einem der Ansprüche 1 bis 7 auszuführen.

## Fig. 1

## Fig. 2

## Fig. 3

Fig. 4

Fig. 5

# Fig. 6

200

202

201

**Europäisches Patentamt**

# EUROPÄISCHER RECHERCHENBERICHT

Nummer der Anmeldung

EP 04 00 8136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,Y | MBANG S ET AL: "FEATURE-BASIERENDE ANWENDUNGEN IN DER PROZESSKETTE KAROSSERIE" CAD-CAM REPORT, HEIDELBERG, DE, Nr. 1, 31. Januar 2003 (2003-01-31), Seiten 38-42, XP001204263 ISSN: 0930-7117 insbesondere der Abschnitt 'Das Ableiten von Umformwerkzeugen' auf Seite 42 * das ganze Dokument * ----- | 1-9 | G06F17/50 |
| Y | GANESAN R ET AL: "A FEATURE-BASED FRAMEWORK FOR TRANSFORMING AND REPRESENTING MULTIPLE FORMAT CAD FOR VIRTUAL PROTOTYPING" PROCEEDINGS OF THE WORKSHOPS ON VIRTUAL ENVIRONMENTS AND THEIR APPLICATIONS AND VIRTUAL PROTOTYPING, XX, XX, August 1995 (1995-08), Seiten 129-145, XP008032905 insbesondere der Abschnitt 4.3 The feature library * das ganze Dokument * ----- | 1-9 | |
| A | HAASIS S ET AL: "KOPPLUNG EINES FEATUREBASIERTEN CAD-SYSTEMS MIT EINEM WISSENSBASIERTEN SYSTEM LINKING A FEATURE-BASED CAD SYSTEM WITH A KNOWLEDGE-BASED SYSTEM" ZWF ZEITSCHRIFT FUR WIRTSCHAFTLICHE FERTIGUNG UND AUTOMATISIERUNG, CARL HANSER VERLAG. MUNCHEN, DE, Bd. 89, Nr. 11, 1. November 1994 (1994-11-01), Seiten 563-565, XP000483548 ISSN: 0947-0085 * das ganze Dokument * ----- -/-- | 1-9 | RECHERCHIERTE SACHGEBIETE (Int.Cl.7) G06F |

Der vorliegende Recherchenbericht wurde für alle Patentansprüche erstellt

| Recherchenort | Abschlußdatum der Recherche | Prüfer |
|---|---|---|
| München | 14. Februar 2005 | Lerbinger, K |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes Dokument

EPO FORM 1503 03.82 (P04C03)

**EP 1 521 185 A1**

**Europäisches Patentamt**

**EUROPÄISCHER RECHERCHENBERICHT**

Nummer der Anmeldung

EP 04 00 8136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | GARDAN Y ET AL: "FEATURE-BASED MODELS FOR CAD/CAM AND THEIR LIMITS" COMPUTERS IN INDUSTRY, ELSEVIER SCIENCE PUBLISHERS. AMSTERDAM, NL, Bd. 23, Nr. 1/2, 1. November 1993 (1993-11-01), Seiten 3-13, XP000415703 ISSN: 0166-3615 insbesondere der Abschnitt 3.1 Libraries and product model * das ganze Dokument * ----- | 1-9 | |

**RECHERCHIERTE SACHGEBIETE (Int.Cl.7)**

Der vorliegende Recherchenbericht wurde für alle Patentansprüche erstellt

| Recherchenort | Abschlußdatum der Recherche | Prüfer |
|---|---|---|
| München | 14. Februar 2005 | Lerbinger, K |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

15